# EUROPÄISCHE PATENTANMELDUNG

(11) **EP 0 984 607 A1**
(43) Veröffentlichungstag der Anmeldung: **08.03.2000**
(21) Anmeldenummer: 99115436.0
(22) Anmeldetag: 05.08.1999
(51) Int. Cl.: H04M 1/60, H04M 1/72

(54) **Freisprechvorrichtung zum schnurlosen Verbinden mit einer Basisstation eines Telefonsystems**

(30) Priorität: 04.09.1998 DE 19840366
(71) Anmelder: Deutsche Telekom AG, 53113 Bonn (DE)
(72) Erfinder: Hellenthal, Georg H., 51105 Köln (DE); Hoffmann, Matthias, 06132 Halle (DE)

(57) **Zusammenfassung**

Die Erfindung betrifft eine mit einer Basisstation eines Telefonsystems schnurlos verbindbaren Freisprechvorrichtung (15), die ein freihändiges Arbeiten auch dann erlaubt, wenn Anrufe hergstellt oder entgegen genommen werden.

Dazu umfaßt die Freisprechvorrichtung (15) eine Mikrofon/Kopfhörer-Garnitur (7) und eine mobile Einrichtung (5), die wiederum mit einer Luftschnittstelle (4a) zum Senden und/oder Empfangen eines Rufes zu oder von der Basisstation (1), einem Sende-Empfangsteil (11), einer Stromversorgungseinrichtung (10), einem Ein/Aus-Schalter zum Annehmen eines Rufes und eine Schnittstelle (6) zur Verbindung mit der Kopfhörer/Mikrofon-Garnitur (7) aufweist.

Dieser besondere Aufbau vermeidet die Verwendung systembedingter unterschiedlicher Schnittstellen dadurch, daß eine einzige Schnittstelle (6) zwischen der mobilen Einrichtung (5) nach dem Headset (7) verwendet wird.

## Beschreibung

Die Erfindung betrifft eine Freisprechvorrichtung zum schnurlosen Verbinden mit einer an eine Teilnehmeranschlußeinheit anschaltbaren Basisstation eines Telefonsystem.

Mikrofon/Kopfhörer-Garnituren, für die sich mittlerweile die Bezeichnung Headset durchgesetzt hat, werden bisher an schnurgebundenen Telefonendgeräten eingesetzt, um bei der Abwicklung von Anrufen beide Hände frei zu haben, um andere, gleichzeitig notwendige Arbeiten, wie die Bedienung einer Tastatur für Schreibmaschinen, PCs ugl. auszuführen.

Allerdings ist der Aktionsradius eines schnurgebundenen Headsets durch die Anschlußschnurlänge zwischen Headset und Telefonendgerät begrenzt. Außerdem behindert, vor allem eine längere Anschlußschnur, die freie Beweglichkeit bei Arbeiten, die in einem größeren Abstand vom Telefonendgerät auszuführen sind, und sie stellt auch eine Gefahr dar, weil sich die Schnur verdrehen oder verzwirnen kann, über welche die Bedienungsperson dann leicht ins Stolpern geraten kann.

Der Einsatz eines Headset an einem schnurlosen Telefon oder Mobiltelefon ist ebenfalls möglich, wobei dann der Aktionsradius deutlich größer ist.

Allerdings ergeben sich hierbei andere Probleme, die im Zusammenhang mit besonderen Schnittstellen stehen, die an jedem Schnurlos-oder Mobiltelefon erforderlich sind, um die Headsets anschließen zu können.

Daraus resultiert der entscheidende Nachteil solcher bekannter Lösungen, daß eine Vielzahl unterschiedlicher technischer Realisierungen für eine Vielzahl unterschiedlicher Geräte systembedingt notwendig sind.

Ferner ist bei jedem Anruf eine Bedienhandlung zur Annahme des Anrufes erforderlich. Das Headset stellt somit eine zusätzliche externe Baugruppe des jeweiligen Endgerätes für Mikrofon und Hörer dar, wie auch der Katalog der deutschen Telekom für Herbst/Winter 1997/1998, Seite 61 belegt.

Nachteilig ist auch, daß die Realisierung vieler unterschiedlicher Schnittstellen, die hierzu notwendig sind, wegen mangelnder Normung und erheblicher Kosten nicht durchsetzbar sind. Dabei sind ferner bei genereller Anwendung solcher Systeme auch diejenigen Anwender betroffen, die keine Schnittstelle für Headsets benötigen.

Daher hat sich die Erfindung die Aufgabe gestellt, eine Lösung für Headsets anzugeben, die ohne die oben dargestellte Vielfalt an Schnittstellen zwischen Endgerät und Headset auskommt und dennoch eine freihändige Bedienung der eingehenden und abgehenden Anrufe gestattet und keine sog. Stolperfallen aufweist.

Gelöst wird diese Aufgabe der Erfindung durch die Merkmale des Anspruchs 1.

Um einem Kunden ein freies Sprechen innerhalb eines schnurlosen Telefonsystems zu ermöglichen, ohne daß spezielle Schnittstellen an einem schnurlosen Telefon oder an der Basisstation implementiert werden müssen, wird eine Freisprechvorrichtung zum schnurlosen Verbinden mit einer an eine Teilnehmeranschlußeinheit anschaltbaren Basisstation eines schnurlosen Telefonsystems, wie zum Beispiel eines nach dem DECT-Standard (DECT von Digital European Cordless Telecommunication) zur Verfügung gestellt. Die Freisprechvorrichtung enthält eine Mikrofon/Kopfhörer-Garnitur, eine mobile Einrichtung mit einer Luftschnittstelle zum Senden und/oder Empfangen eines Rufes zu oder von der Basisstation, mit einem Sende-Empfangsteil, mit einer Stromversorgungseinrichtung, mit einem Ein/Aus-Schalter zum Annehmen eines Rufes und einer Schnittstelle zur Verbindung mit der Kopfhörer/Mikrofon-Garnitur.

Vorteilhafte Weiterbildungen sind Gegenstand der Unteransprüche.

Damit die mobile Einrichtung wie ein schnurloses Telefon nach dem DECT-Standard an der Basisstation angemeldet und betrieben werden kann, verfügt sie über einen DECT-Adapter, der den GAP (Generic Access Profile)-Standard realisieren kann. Auf diese Weise ist ferner gewährleistet, daß herstellerunabhängige mobile Einrichtungen an der Basisstation angemeldet werden können.

Um von der Freisprechvorrichtung aus beispielsweise einen Verbindungsaufbau einleiten zu können, enthält die mobile Einrichtung eine alphanumerische Tastatur zur Eingabe der entsprechenden Steuerzeichen. Insbesondere ist hierbei eine Verwendung der Freisprechvorrichtung als Point of Sales Terminal möglich.

In hochfrequenzgestörten Räumlichkeiten ist ein weitgehend störungsfreier Betrieb möglich, wenn als Luftschnittstelle eine Infrarot-Übertagungsstrecke verwendet wird. Auch die Verbindung zwischen der mobilen Einrichtung und der Mikrofon/Kopfhörer-Garnitur kann über eine Infrarot-Verbindung erfolgen.

Bei konsequenter Anwendung der Erfindung ergeben sich eine Reihe von Vorteilen, da nun einfache Bedienelemente für die Annahme von Anrufen mit den Funktionselemente des Headset kombiniert werden können. Hierzu ist weder ein Standard-Mobilteil noch eine gesonderte Schnittstelle erforderlich.

Im folgenden wird die Erfindung anhand eines Ausführungsbeispiels in Verbindung mit den beigefügten Zeichnungen näher beschrieben. Die Zeichnungen zeigen dabei im einzelnen:
- Fig. 1: ein Blockschaltbild der Basisstation mit einem anlogen und/oder digitalen Anschluß an das Telefonnetz,
- Fig. 2: ein Blockschaltbild des Headset mit einem Zusatzteil gemäß der Erfindung und
- Fig. 3: ein Blockschaltbild des Zusatzteils.

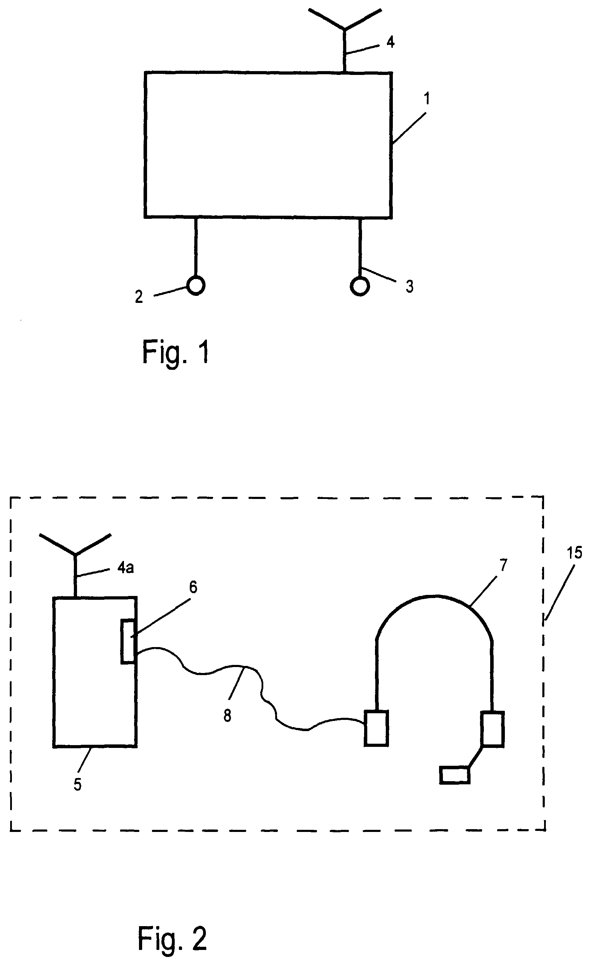

Fig. 1 und 2 zeigen die wesentlichen Teile eines schnurlosen Telefonsystems, in dem die Erfindung verwirklicht ist. Fig. 1 zeigt eine an sich bekannte Basisstation 1, die mit einer analogen und/oder digitalen Schnittstelle 2, 3 zum Anschalten an eine nicht dargestellte Teilnehmeranschlußeinheit ausgerüstet ist.

Fig. 2 zeigt eine Freisprechvorrichtung 15, die ein mobiles Zusatzteil 5 und eine Mikrofon/Kopfhörer-Garnitur 7, kurz Headset genannt, aufweist, bei der kein schnurloses Telefon und keine dazu passende gesonderte Schnittstelle mehr erforderlich sind. Das Zusatzteil 5 verfügt über ein Bedienelementeteil 12, der in seiner einfachsten Form einen Ein-/Ausschalter zur Annahme/Beendigung von Anrufen aufweist und damit funktional dem Gabelschalter beim Abheben/Auflegen eines Telefonhörers vom/auf den Telefonapparat entspricht.

Bei einem Anruf erfolgt das Annehmen dieses Anrufs direkt an der Freisprechvorrichtung 15, die an der Basisstation 1 wie ein gewöhnliches schnurloses Handgerät angemeldet wird.

Demzufolge wird zunächst für den ankommenden Anruf in dem Zusatzteil 5 die Funktion eines schnurlosen Handgerätes realisiert.

Zur Erweiterung der Leistungsfähigkeit der Freisprechvorrichtung 15 kann das Zusatzteil 5 auch mit einem Tastenwahlblock oder einer Tastatur 12 zur Eingabe von Rufnummern zum Verbindungsaufbau zu anderen Geräten und damit für abgehende Verbindungen für die Übertragung von Sprache oder von Daten, im letzteren Falle beispielsweise bei Anwendungen als Point of Sales (POS) Terminal versehen werden. Hierbei dient das mit der Tastatur 12 erweiterte Zusatzteil 5 zur Erfassung von Betriebs-und Handelsparametern, beispielsweise von Mengenangaben und Lagerorten von Waren und Einzelteilen direkt vor Ort in Lagern, Magazinen oder dgl., wobei über die Basisstation 1 durch Wahl einer hierfür vorgesehenen Rufnummer eine Eingabe dieser Werte direkt in die zugeordnete Datenverarbeitungsablage des Unternehmens erfolgen kann.

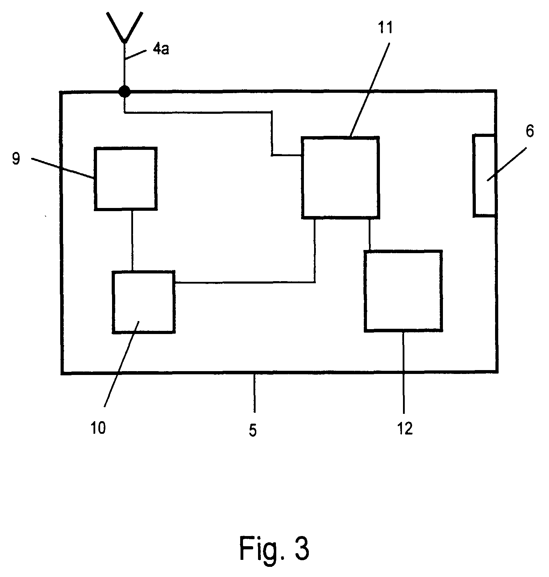

Das Zusatzteil 5 enthält, wie in Fig. 2 und 3 zu sehen, einen an sich bekannten Sende-Empfänger 11 und eine Schnittstelle 6 zum Verbinden mit dem Headset 7. Die Verbindung zwischen dem Headset 7 und dem Zusatzteil 5 kann über eine Draht-, Infrarot- oder Steck-Verbindung erfolgen. Im vorliegenden Beispiel ist das Zusatzteil 5 über eine Anschlußschnur 8 mit Headset 7 verbunden.

Das zusatzteil 5 umfaßt ferner eine Antenne 4a zur Abstrahlung und zum Empfang der Trägerwellen zur Übertragung von Sprache und/oder Daten, einen DECT-Adapter 9 und eine Stromversorgung 10. Mit Hilfe des DECT-Adapters 9 kann eine Kommunikation mit der Basisstation 1 gemäß dem DECT-Standard und beispielsweise dem GAP-Standard durchgeführt werden.

Das zusatzteil 5 ist transportabel, da es z.B. durch einen Clip, Anstecker o.ä. an der Kleidung des Benutzers festgemacht oder mittels einer Tragetasche/Umhängetasche am Körper getragen werden kann, wobei auch die Hände für die oft erforderliche gleichzeitige Durchführung anderer Aufgaben, wie beispielsweise die Eingabe von Daten über eine Tastatur, frei bleiben.

Als Stromversorgung können handelsübliche Batterien oder über eine in der Basisstation vorhandene Ladenstation wiederaufladbare Akkus verwendet werden.

Es ist auch möglich, in Räumlichkeiten, bei denen eine optische Sichtverbindung zwischen Basisstation 1 und mobilem Zusatzteil 5 besteht, die Luftschnittstelle 4-4a als Infrarot- Übertragungsstrecke auszubilden, die insbesondere im Einflußbereich von durch Maschinen und Transformatoren hervorgerufenen Hochfrequenzstörfeldern, einen weitgehend störungsfreien Betrieb erlaubt. Zur Verbesserung der optischen Sichtverhältnisse kann auch die Luftschnittstelle 4 der Basisstation 1 an der Raumdecke angebracht sein.

## Patentansprüche

1. Freisprechvorrichtung zum schnurlosen Verbinden mit einer an eine Teilnehmeranschlußeinheit anschaltbaren Basisstation (1) eines Telefonsystems mit folgenden Merkmalen:
eine Mikrofon/Kopfhörer-Garnitur (7)
eine mobile Einrichtung (5) umfassend
eine Luftschnittstelle (4a) zum Senden und/oder Empfangen eines Rufes zu oder von der Basisstation (1),
ein Sende-Empfangsteil (11),
eine Stromversorgungseinrichtung (10),
einen Ein/Aus-Schalter zum Annehmen eines Rufes und
eine Schnittstelle (6) zur Verbindung mit der Kopfhörer/Mikrofon-Garnitur (7).

2. Freisprechvorrichtung nach Anspruch 1,
dadurch gekennzeichnet, daß die mobile Einrichtung (5) einen DECT-Adapter (9) aufweist, der insbesondere den GAP-(Generic Access Profile)-Standard.

3. Freisprechvorrichtung nach Anspruch 1 und/oder 2, dadurch gekennzeichnet, daß die mobile Einrichtung (5) ein alphanumerisches Tastaturfeld (12) aufweist.

4. Freisprechvorrichtung nach Anspruch 3, dadurch, gekennzeichnet, daß diese nach Art eines Point of Sales Terminals (POS) zur Erfassung von Daten an ihrem jeweiligen Ursprungsort und zur Übertragung dieser Daten zu einer übergeordneten Datenverarbeitungsanlage verwendbar ist.

5. Freisprechvorrichtung nach einem oder mehreren der Ansprüche 1 bis 4, dadurch gekennzeichnet, daß die Luftschnittstelle (4-4a) und die Schnittstelle (6) als eine Infrarot-Übertragungsstrecke ausgebildet ist.
